**Europäisches Patentamt**

**European Patent Office**

**Office européen des brevets**

(19)

(11) Veröffentlichungsnummer : **0 126 240**
**B1**

(12) **EUROPÄISCHE PATENTSCHRIFT**

(45) Veröffentlichungstag der Patentschrift :
03.12.86

(21) Anmeldenummer : **84103208.9**

(22) Anmeldetag : **23.03.84**

(51) Int. Cl.⁴ : **A 01 K   5/02**

(54) Verfahren und Vorrichtung zum automatischen Füttern grosser Tierbestände, insbesondere von Schweinen.

(30) Priorität : **09.05.83 DE 3316916**

(43) Veröffentlichungstag der Anmeldung :
**28.11.84 Patentblatt 84/48**

(45) Bekanntmachung des Hinweises auf die Patenterteilung : **03.12.86 Patentblatt 86/49**

(84) Benannte Vertragsstaaten :
**AT BE CH DE FR GB IT LI LU NL SE**

(56) Entgegenhaltungen :
**DE-A- 2 025 209**
**DE-A- 3 118 027**
**DE-A- 3 123 904**

(73) Patentinhaber : **LOHMANN APPARATEBAU GMBH**
**Altenwalder Chaussee 94-100**
**D-2190 Cuxhaven (DE)**

(72) Erfinder : **Hölter, Walter, Dipl.-Ing. Dipl.-Inf.**
**D-2876 Ollener Moor 9 (DE)**

(74) Vertreter : **Dipl.-Ing. H. Hauck Dipl.-Phys. W. Schmitz**
**Dipl.-Ing. E. Graalfs Dipl.-Ing. W. Wehnert Dr.-Ing. W.**
**Döring**
**Neuer Wall 41**
**D-2000 Hamburg 36 (DE)**

EP 0 126 240 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft ein Verfahren zum automatischen Füttern von Tieren, insbesondere Schweinen, bei welchem ein vorgegebener Strom eines pumpfähigen Futterbreies von einem Zubereitungsbereich aus zu einem davon entfernten Fütterungsbereich durch eine Rohrleitung gefördert wird, deren Querschnitt entsprechend der angesichts der Konsistenz des Futterbreies erforderlichen Förderantriebsleistung und dem bei Besetzung des Fütterungsbereichs mit herangewachsenen Tieren vorliegenden Futterbedarf bemessen ist, wobei vorzugsweise die Fütterungszeiten und Futtermengen automatisch vorgegeben werden.

Verfahren der angegebenen Art (DE-A-3 123 904) sind insbesondere bei der Schweinefütterung sehr verbreitet, weil mit sehr geringem apparativem Aufwand auch große Tierbestände weitgehend automatisch gefüttert werden können und somit menschliche Arbeitskraft nur noch zur Kontrolle der Anlage und zur Beobachtung der Tiere erforderlich ist. Da der Futterbrei sehr viskos ist, muß man, um mit noch erträglichen Antriebsleistungen für die Fördereinrichtung auszukommen, Rohrleitungen mit verhältnismäßig großem innerem Querschnitt, beispielsweise Rohrleitungen mit einem inneren Durchmesser von 60 oder 100 mm, wählen. Wichtig ist dabei auch, daß die bei einer Fütterung zu verabreichende Futtermenge möglichst rasch in den Fütterungsbereich befördert wird, um Unruhe und Stress (und damit verbunden Ausfälle) im Tierbestand zu vermeiden. Aus den vorgenannten Gründen ergibt sich notwendigerweise ein erhebliches Volumen und damit eine erhebliche Füllmenge an Futterbrei in der Rohrleitung. So können beispielsweise bei großen Tierbeständen leicht 100 und mehr Meter Länge der Rohrleitung vorliegen, so daß Volumen der Rohrleitung von 300 bis 1 000 Liter ohne weiteres vorkommen können. Bei voller Besetzung des Fütterungsbereiches mit erwachsenen Tieren bleibt wegen des dann vorliegenden hohen Futterbedarfs dennoch die Verweilzeit des Futterbreies in der Rohrleitung verhältnismäßig klein.

Es kommt jedoch zu Schwierigkeiten, wenn man mit einer gegebenen Anlage erheblich geringere Futtermengen verfüttern will. Das ist insbesondere der Fall, wenn statt herangewachsener Tiere Jungtiere gefüttert werden sollen, die nicht nur weniger Futter pro Tier benötigen, sondern oft auch in geringerer Besetzungszahl als bei erwachsenen Tieren gehalten werden. Die Verweildauer des Futterbreies in der Rohrleitung kann dann leicht so groß werden, daß der in der Rohrleitung befindliche Futterbrei sich zersetzt und verdirbt und dann beim Verfüttern Gesundheitsstörungen, Wachstumsstörungen oder sogar Todesfälle bei den Tieren verursacht.

Noch schwieriger werden die Verhältnisse, wenn in dem Fütterungsbereich nur in bestimmten Abschnitten Jungtiere gehalten werden und die anderen Abschnitte leer sind. Der Futterbedarf ist dann besonders stark herabgesetzt.

Schließlich können weitere Schwierigkeiten dadurch auftreten, daß in verschiedenen Abschnitten des Fütterungsbereiches Futter unterschiedlicher Zusammensetzung verfüttert werden soll. Das ist insbesondere der Fall, wenn die verschiedenen Abschnitte mit Tieren verschiedenen Alters, z. B. Jungtieren bzw. erwachsenen Tieren, besitzt sind.

Man hat versucht, die beschriebenen Schwierigkeiten dadurch zu umgehen, daß man in Fütterungsanlagen, die für stark wechselnde Futterbedarfsmengen und/oder unterschiedliche Futterzusammensetzungen geeignet sein sollen, eine zweite Rohrleitung mit insbesondere geringerem lichtem Querschnitt verlegt. Der dafür erforderliche zusätzliche Aufwand ist beträchtlich. Die Bedienung, die Wartung und die Reinigung solcher Anlagen sind erheblich umständlicher als bei Anlagen mit nur einer einzigen Rohrleitung. Die Gefahr, daß Futter durch zu lange Verweilzeiten in der Rohrleitung verdirbt, ist nicht beseitigt.

Die vorliegende Erfindung geht von der Aufgabe aus, ein einfaches Fütterungsverfahren für große Tierbestände zu schaffen, das hoch automatisierbar ist und sowohl für stark wechselnden Futterbedarf als auch für unterschiedliche Futterzusammensetzung geeignet ist.

Nach der Erfindung wird diese Aufgabe gelöst mit einem Verfahren der eingangs angegebenen Art, das dadurch gekennzeichnet ist, daß zum Füttern mit verringertem Futterbedarf oder veränderter Futter-Zusammensetzung, insbesondere bei der Fütterung von Jungtieren, die sich gegebenenfalls nur in gewählten Abschnitten des Fütterungsbereiches befinden, ein Futterbrei-Strang begrenzter Länge mittels einer in die Rohrleitung eingegebenen ernährungsphysiologisch unbedenklichen Füllflüssigkeit durch die Rohrleitung zu wenigstens einer Abgabestelle in dem Fütterungsbereich befördert wird, und daß die Länge des Stranges derart bemessen wird, daß der Strang in einer für seine Frischhaltung hinreichend kurzen Zeitspanne verfüttert wird.

Bei dem erfindungsgemäßen Fütterungsverfahren wird ein und dieselbe Rohrleitung für alle Größen des Futterbedarfs benutzt; es werden jedoch auch bei niedrigem Futterbedarf übermäßig lange Verweilzeiten des Futterbreies in der Rohrleitung vermieden, da der Futterbreistrang mit hoher Geschwindigkeit in den Fütterungsbereich gefördert und dort in kurzer Zeit vollständig verbraucht werden kann. Da die Rohrleitung wie bei der vorbekannten Arbeitsweise vollständig mit pumpfähigem flüssigem Medium gefüllt bleibt, kann grundsätzlich die gleiche Verfahrenstechnik wie bei ähnlichen vorbekannten Verfahren angewandt werden. Die Verringerung des Futterverbrauchs wird nicht durch niedrigen Durchfluß in der Rohrleitung, sondern durch eine abschnittsweise Füllung der Rohrleitung mit Futterbrei erzielt.

Es hat sich gezeigt, daß bei dem erfindungsgemäßen Verfahren eine Vermischung der nur dem Transport dienenden Füllflüssigkeit mit dem Futterbreistrang nicht in störendem Ausmaß eintritt, und zwar auch nicht bei verhältnismäßig langen Rohrleitungen. Da die Füllflüssigkeit ernährungsphysiologisch unbedenklich ist, kann sie mit in den Füllbereich entleert oder in an sich bekannter Weise im Kreislauf in den Zubereitungsbereich zurückgeführt werden. Als Füllflüssigkeit wird bevorzugt Wasser verwendet, weil es überall zur Verfügung steht und für die Ernährung der Tiere ohnehin benötigt wird.

Die Verwendung von Wasser statt Futterbrei ist schon bei einer bekannten Fütterungsanlage (DE-A-3 118 027) beschrieben worden. Dort wird jedoch das Wasser an der Abgabestelle abgegeben, um den dort fressenden Tieren das Ende einer Fütterungsperiode anzuzeigen ; das Wasser kann somit grundsätzlich nicht als Transportmittel für einen an mehreren Abgabestellen entlanggepumpten Futterbreistrang dienen.

Ferner war es auch schon bekannt, zum Abschluß der Fütterung das in der Rohrleitung noch vorhandene Futter mit Hilfe eines Wasserschubstromes weiterzufördern, um das Futter vollständig aus der Rohrleitung zu entfernen (DE-A-2 025 209). Dabei ist jedoch weder an eine Verwendung eines Wasserschubstromes zur Anpassung der Fütterungsanlage an einen verringerten Futterbedarf noch an die dadurch erzielbaren Vorteile gedacht worden.

Bei größeren Fütterungsanlagen ist es üblich, daß in dem Fütterungsbereich der Futterbrei über eine Reihe von längs der Rohrleitung verteilten, aus der Rohrleitung gespeisten Abgabestellen abgegeben wird, die in Gruppen von je mindestens einer Abgabestelle wahlweise zu der Rohrleitung hin geöffnet werden können. Beim Füttern muß dann der verwendete Futterbreistrang beträchtliche Wege über Krümmungen und an Ventilen vorbei passieren. Um dabei den Zusammenhalt des Futterbreistranges möglichst wenig zu stören, wird in Ausgestaltung der Erfindung das Verfahren dann so durchgeführt, daß ausgewählte Gruppen von Abgabestellen nacheinander aus ein und demselben Futterbreistrang mit gewählten Futterbreimengen versorgt werden, wobei die jeweils anderen Gruppen von der Rohrleitung abgesperrt werden. Nach dieser Ausgestaltung sind also die Gruppen von Abgabestellen bezüglich des Futterbreistranges in Serie untereinander verbunden, so daß der Futterbreistrang sich nicht in Verzweigungen zerteilen muß.

Bei dem erfindungsgemäßen Verfahren ist eine sehr weitgehende Automatisierung der Fütterung ohne weiteres möglich, weil der jeweilige Aufenthaltsort des Futterbreistranges aus dem in die Rohrleitung eingegebenen Durchfluß sehr genau bestimmt werden kann. Demgemäß wird in Ausgestaltung der Erfindung die momentane Lage des Futterbreistranges in der Rohrleitung aus den in die Rohrleitung eingegebenen Volumen an Futterbrei und Füllflüssigkeit ermittelt, und nur im Lagebereich des Futterbreistranges liegende Abgabestellen der ausgewählten Gruppen werden zu der Rohrleitung hin geöffnet. Bei dieser Ausführungsform werden insbesondere keine Fühlmittel für die Lage des Futterbreistranges im Fütterungsbereich benötigt.

Auch in dem Fall, daß der Futterbreistrang in bestimmte Transportwege von mehreren möglichen Transportwegen hineingelenkt werden muß, ist die erwähnte Ermittlung der Lage des Futterbreistranges vorteilhaft ; es können nämlich dann Leitventile zum Bestimmen des Transportweges des Futterbreistranges in Abhängigkeit von der ermittelten Lage des Futterbreistranges betätigt werden.

Bei Fütterungsprogrammen, die verhältnismäßig kurze zeitliche Abstände zwischen einzelnen Fütterungen vorsehen, kann es zweckmäßig sein, entsprechend dem Fütterungsprogramm mehrere Futterbreistränge zu bestimmten Zeiten nacheinander und dazwischen die Füllflüssigkeit in die Rohrleitung einzugeben. Dadurch wird weniger Futterbrei eingegeben als bei Verwendung eines Futterbreistranges, der für mehrere aufeinanderfolgende Fütterungen ausreicht, und dementsprechend niedriger ist die Verweilzeit des Futterbreies in der Rohrleitung.

Grundsätzlich kann die Rohrleitung an ihrem jenseits des Fütterungsbereiches liegenden Ende einfach geschlossen sein ; die Fortbewegung der in der Rohrleitung stehenden Säule aus Futterbrei und Füllflüssigkeit wird dann allein nach Maßgabe des Verbrauchs gesteuert, und auch ein Durchspülen der Rohrleitung ist über die am weitesten stromab liegende Abgabestelle ohne weiteres möglich. In manchen Fällen wird es aber erwünscht sein, die Füllflüssigkeit und etwaige überschüssige Anteile des Futterbreistranges aus dem Fütterungsbereich abzuführen, insbesondere auch zurück zum Zubereitungsbereich, beispielsweise zur Wiederverwendung. In diesem Fall ist es in Ausgestaltung der Erfindung zweckmäßig, wenn die Füllflüssigkeit und etwaige überschüssige Anteile des Futterbreistranges aus dem Fütterungsbereich über eine wahlweise zu öffnende Ableitung abgeführt werden.

Man erkennt ohne weiteres, daß bei dem erfindungsgemäßen Verfahren erforderlichenfalls auch Futterbreistränge verschiedener Zusammensetzung nacheinander in die Rohrleitung eingegeben und zu gewählten Abgabestellen geleitet werden können, und daß diese spezielle Arbeitsweise ohne weiteres programmierbar ist und somit auch automatisch zum Ablauf gebracht werden kann. Es können also nach dem erfindungsgemäßen Verfahren mit einer einzigen Rohrleitung Futterportionen unterschiedlicher Zusammensetzung in unterschiedlichen, auch kleinsten, Mengen zu gewählten Abgabestellen transportiert werden.

Zur Durchführung des Verfahrens dient nach der Erfindung eine Vorrichtung mit einer Zubereitungseinrichtung zum Herstellen eines pumpfähigen Futterbreies aus mehreren Komponenten, einer Rohrleitung zum Herstellen einer Verbindung zwischen der Zubereitungseinrichtung und einem Fütterungsbereich mit wenigstens einer Gruppe von Abgabestellen, die steuerbare Abgabeventile aufweisen, einer Fördereinrichtung zum Fördern von in der Rohrleitung befindlichen pumpfähigen Medien, Mitteln zum Bestimmen des Durchflusses in der Rohrleitung und einer Steuereinrichtung zum vorzugsweise automatischen Steuern der Vorrichtung, wobei der freie Querschnitt der Rohrleitung entsprechend der Viskosität des Futterbreies derart gewählt ist, daß ein für die Fütterung von erwachsenen Tieren ausreichender Durchfluß an Futterbrei mit annehmbarem Leistungsaufwand für die Fördermittel herstellbar ist, und wobei vorzugsweise die Rohrleitung jenseits der Abgabestellen über ein steuerbares Absperrventil an eine Ablaufleitung angeschlossen ist ; diese Vorrichtung ist erfindungsgemäß dadurch gekennzeichnet, daß Mittel zum wahlweisen bemessenen Einspeisen einer ernährungsphysiologisch unbedenklichen Füllflüssigkeit, vorzugsweise Wasser, anstelle von Futterbrei in die Rohrleitung vorgesehen sind, und daß die Steuereinrichtung Mittel zum Bestimmen der Lage eines in die Rohrleitung eingegebenen und von Füllflüssigkeit vortreibbarem Futterbreistranges begrenzter Länge aufweist und zum Steuern der Abgabeventile in Abhängigkeit von der ermittelten Lage des Futterbreistranges eingerichtet ist.

Die erfindungsgemäße Vorrichtung erfordert gegenüber herkömmlichen Vorrichtungen ähnlicher Art nur einen geringen Mehraufwand. Durch die Herstellung eines Futterbreistranges begrenzter Länge, der von einer Füllflüssigkeit vortreibbar ist, werden die schon beschriebenen Vorteile erzielt, insbesondere der wichtige Vorteil, daß die Verweilzeit des Futters in der Rohrleitung auch bei stark verringertem Futterbedarf so kurz gehalten werden kann, daß ein Verderben des Futters ausgeschlossen ist. Es ist technisch leicht möglich, insbesondere durch eine Durchflußmessung, der Steuereinrichtung Daten über die Lage des Futterbreistranges in der Rohrleitung zur Verfügung zu stellen derart, daß die Steuereinrichtung dann die Abgabeventile richtig so steuern kann, daß dort, wo ein Abgabeventil geöffnet wird, sich auch der Futterbreistrang gerade befindet. Diese Ermittlung der Lage des Futterbreistranges schafft also die Voraussetzung dafür, daß die erfindungsgemäße Vorrichtung praktisch vollständig automatisch betrieben werden kann.

In Ausgestaltung der Erfindung ist vorzugsweise vorgesehen, daß die Gruppen der Abgabestellen an längs der Rohrleitung verteilten Stellen an die Rohrleitung angeschlossen sind. In bezug auf die Rohrleitung sind also die Gruppen der Abgabestellen in Reihe geschaltet. Dies führt zu dem schon erwähnten Vorteil, daß der Futterbreistrang sich nicht unnötig zu zerteilen braucht. Vorzugsweise wird dieses Prinzip auch noch innerhalb der Gruppen angewendet, d. h., daß die zu ein und derselben Gruppe gehörigen Abgabestellen an längs der Rohrleitung verteilten Stellen an die Rohrleitung angeschlossen sind ; dann ist auch eine Zerteilung des Futterbreistranges innerhalb einer Gruppe nicht erforderlich.

Für die erwähnte spezielle Arbeitsweise, bei der Futterbreistränge unterschiedlicher Zusammensetzung nacheinander in die Rohrleitung eingegeben und zu gewählten Abgabestellen geleitet werden, ist zweckmäßigerweise die Zubereitungseinrichtung zum wahlweisen Herstellen von unterschiedlichen Futterbrei-Zusammensetzungen eingerichtet.

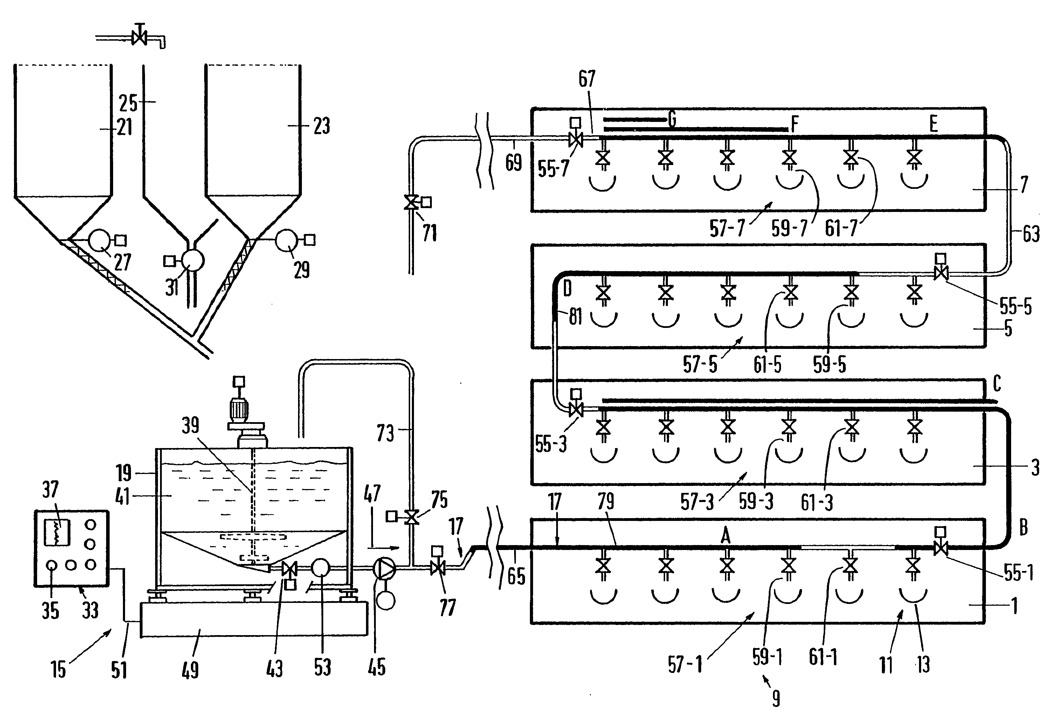

Die Erfindung wird im folgenden anhand eines Ausführungsbeispiels in Verbindung mit der Zeichnung näher beschrieben.

Die Figur zeigt eine Vorrichtung zum Füttern von Schweinen. Es sind vier Ställe 1, 3, 5, 7 in einem Fütterungsbereich 9 vorgesehen. In jedem Stall sind sechs Buchten 11 vorhanden. Jede Bucht hat einen Futtertrog 13. Von einem Zubereitungsbereich 15 aus, der räumlich von dem Fütterungsbereich 9 entfernt sein kann, erstreckt sich eine Rohrleitung 17 zu dem Fütterungsbereich 9. In dem Zubereitungsbereich 15 ist eine Zubereitungseinrichtung zum Herstellen eines pumpfähigen Futterbreies aus mehreren Komponenten vorgesehen. Diese Einrichtung enthält einen Mischtank 19 und Vorratsbehälter 21, 23, 25, aus denen der Mischtank 19 über steuerbare Komponenten-Dosiermittel 27, 29, 31 mit den Futterkomponenten beschickt werden kann. Bei dem dargestellten Beispiel ist angenommen, daß die Vorräte 21 und 23 zerkleinerte fließfähige feste Futterkomponenten enthalten und der Vorrat 25 Wasser enthält. Die Komponenten-Dosiermittel werden bei der dargestellten Ausführungsform von einem zentralen Steuergerät 33 von Hand (Bedienungsknöpfe 35) oder von einem Programm 37 gesteuert. Der Mischtank 19 hat ein Rührwerk 39, das ebenfalls vom Steuergerät 33 aus schaltbar ist. Somit kann in dem Mischtank ein Futterbrei 41 von gewünschter Zusammensetzung zubereitet werden.

Die Rohrleitung 17 ist über ein steuerbares Ventil 43 an den unteren Bereich des Mischtanks 19 angeschlossen. In der Rohrleitung 17 ist eine Fördereinrichtung 45 vorgesehen, die den aus dem Mischtank 19 entnommenen Futterbrei in Richtung des Pfeils 47 in der Rohrleitung 17 weiterbefördert. Bei der dargestellten Ausführungsform ist der Mischtank 19 auf einer Waage 49 gelagert, die sowohl das Füllen des Mischtanks 19 steuert als auch dazu verwendet werden kann, das Gewicht und/oder das Volumen der über die Rohrleitung 17 abgeführten Menge gravimetrisch zu bestimmen. Die Waage 49 liefert ständig ein Mengen-Signal 51 an das Steuergerät 33. Statt dessen oder zusätzlich kann ein Durchfluß-Meßgerät 53 vorgesehen sein, um die aus dem Mischtank abgegebene Menge zu messen. Auch die Fördereinrichtung 45 kann als Durchflußmesser ausgebildet sein.

Die Rohrleitung 17 hat einen so großen freien Querschnitt, daß die zur Fütterung herangewachsener Tiere erforderliche Futterbreimenge mit erträglichem Aufwand an Pumpleistung gefördert werden kann. Die Rohrleitung 17 erstreckt sich nacheinander durch die Ställe 1, 3, 5, 7. Am Ende jedes durch einen Stall dargestellten Abschnitts der Rohrleitung 17 ist ein Gruppen-Absperrventil 55-1, 55-3, 55-5, 55-7 vorgesehen. In jedem Stall ist an die Rohrleitung 17 eine Gruppe 57-1, 57-3, 57-5, 57-7 von Abgabestellen 59-1, 59-3, 59-5, 59-7 an längs der Rohrleitung 17 verteilten Stellen mit gegenseitigen Abständen an die Rohrleitung 17 über steuerbare Abgabeventile 61-1, ..., 61-7 angeschlossen. Bei der dargestellten Ausführungsform ist jeder Bucht 11 eine Abgabestelle 59 zugeordnet. Im allgemeinen sind die zwischen den Gruppen 57 (Ställen) liegenden Längen 63 der Rohrleitung 17 klein gegen die Länge des Rohrleitungsabschnitts 65 zwischen dem Fütterungsbereich 9 und dem Zubereitungsbereich 15. Dieser Abschnitt 65 kann eine beträchtliche Länge haben, insbesondere bei größeren Ställen.

Bei der dargestellten Ausführungsform setzt sich die Rohrleitung 17 an ihrem stromabwärtigen Ende 67 (am Ende des letzten Stalles 7) über ein dort vorgesehenes Ablaufventil, als welches hier das letzte Gruppen-Absperrventil 55-7 dient, in eine Ableitung 69 fort, die wie dargestellt zu dem Zubereitungsbereich 15 zurückführt ; dort ist die Ableitung 69 durch ein steuerbares Absperrventil 71 abgeschlossen. In dem Zubereitungsbereich 15 kann die Ableitung zum Beispiel in einen Abwasserkanal, eine Abwasser-Aufbereitungsanlage oder gewünschtenfalls auch in den Wasser-Vorrat 25 oder in den Mischtank 19 münden.

In vielen Fällen wird man auf die Ableitung 69 verzichten können, da es im allgemeinen möglich ist, überschüsse Füllflüssigkeit über die Entnahmestellen 59 in die Tröge 13 oder in die Ställe abzulassen.

Die Vorrichtung enthält ferner eine Kreislaufleitung 73 mit einem steuerbaren Absperrventil 75, sowie ein weiteres steuerbares Absperrventil 77 unmittelbar stromab der Abzweigung zur Kreislaufleitung 73. Mit der dargestellten Vorrichtung kann dann bei der Zubereitung des Futterbreies die aus den Komponenten gemischte Masse eine Zeitlang im Kreislauf über den Mischtank 19 und die Kreislaufleitung 73 umgewälzt werden, wobei die Ventile 43 und 75 geöffnet und die Ventile 71 und 77 geschlossen sind.

Die steuerbaren Ventile sind bei der dargestellten Ausführungsform sämtlich an das zentrale Steuergerät 33 angeschlossen und können von dort aus von Hand oder programmgesteuert fernbedient werden.

Die Vorrichtung ist so ausgelegt, daß sie maximal einen Durchfluß an Futterbrei liefern kann, der erforderlich ist, wenn die Ställe mit herangewachsenen Tieren voll belegt sind. Dabei ist wegen des dann verhältnismäßig großen Verbrauchs an Futterbrei die Verweilzeit des Futterbreies in der Rohrleitung so kurz, daß eine störende Zersetzung des Futterbreies nicht eintreten kann. Wenn jedoch die Vorrichtung mit stark verringertem mittlerem Futterbedarf betrieben werden soll, insbesondere bei der Fütterung von Jungtieren, könnte bei der üblichen Arbeitsweise mit durchgehendem Futterbreistrang die Verweilzeit des Futterbreies in der Rohrleitung 17 so groß werden, daß der Futterbrei verdirbt und die Tiere geschädigt werden können. Es wird deshalb von der Zubereitungsstation nur ein Futterbreistrang 79 von begrenzter Länge in die Rohrleitung 17 eingeleitet, und anschließend daran wird eine ernährungsphysiologisch unbedenkliche Füllflüssigkeit, vorzugsweise Wasser, in die Rohrleitung 17 gedrückt, so daß der Futterbreistrang 79 von der Füllflüssigkeit vorangetrieben wird. Der Futterbreistrang 79, der nur eine verhältnismäßig geringe Menge an Futter enthält, kann rasch zu den gewünschten Entnahmestellen 59 vorgetrieben und dort so rasch verfüttert werden, daß keine langen Verweilzeiten des Futterbreies in der Rohrleitung 17 vorkommen. Das Futter kann somit nicht mehr verderben.

Die Herstellung des Futterbreistranges 79 und der daran anschließenden Füllflüssigkeits-Säule kann zum Beispiel dadurch erfolgen, daß in dem Mischtank 19 nur die zum Herstellen des Futterbreistranges erforderliche Menge an Futterbrei hergestellt und nach Entleeren des Mischtanks in die Rohrleitung 17 Wasser nachgefüllt und in die Rohrleitung eingepumpt wird.

Der Betrieb der Vorrichtung wird im folgenden unter der Annahme erläutert, daß nur die Ställe 3 und 7 besetzt sind, und zwar mit Jungtieren, so daß der Futterbedarf nur einen Bruchteil des Wertes beträgt, der bei voller Besetzung mit erwachsenen Tieren vorliegt und für den die Anlage ausgelegt ist. Zum Beispiel kann das gesamte Volumen der Rohrleitung 17 zwischen den Ventilen 77 und 55-7 etwa 700 Liter betragen. Wenn dabei in dem angenommenen Beispiel die Jungtiere in den Ställen 3 und 7 nur je 150 Liter Futterbrei, also insgesamt 300 Liter Futterbrei, pro Fütterung benötigen, ergäbe sich bei der vorbekannten Arbeitsweise, bei der die gesamte Rohrleitung 17 mit Futterbrei gefüllt ist, eine zu große Verweilzeit des Futterbreies.

In der Figur ist der Futterbreistrang 77 in verschiedenen Phasen A, B, C, D, E, F, G dargestellt.

Obwohl nicht erforderlich, wird zweckmäßigerweise zunächst die Rohrleitung 17 in irgendeiner Weise mit Wasser gefüllt. Dies kann insbesondere dadurch geschehen, daß der zunächst leere Mischtank 19 aus den Vorraten 25 mit Wasser gefüllt und das Wasser mit der Fördereinrichtung 45 bei geöffneten Ventilen 81, 55-1, 55-3, 55-5, 55-7 und 71 durch die Rohrleitung 17 gepumpt wird, bis die gesamte Rohrleitung mit Wasser gefüllt und der Mischtank 19 wieder leer ist. Sodann werden bei geschlossenem Ventil 43 vorgegebene Mengen der Futterkomponenten aus den Vorräten 21, 23, 25 in den Mischtank 19 eingefüllt, das Rührwerk 39 wird eine vorgegebene Zeitspanne lang eingeschaltet (dabei kann gewünschtenfalls auch noch ein Umpumpen über die Kreislaufleitung 73 erfolgen), und danach wird die hergestellte Menge des fertigen Futterbreies 41, die für eine Fütterung ausreicht, von der Fördereinrichtung 45 bei geöffneten Ventilen 43 und 77 geschlossenem Kreislaufventil 75 in die Rohrleitung 17 hineingedrückt. Sobald der Mischtank 39 leer ist, wird aus dem Vorrat 25 Wasser nachgefüllt, so daß dann die Fördereinrichtung 45 Wasser statt Futterbrei in die Rohrleitung 17 drückt. Es ergibt sich so ein Futterbreistrang 79 begrenzter Länge, der zum Beispiel die dargestellten Zwischenlage A durchläuft. Sobald das insgesamt in die Rohrleitung 17 gedrückte Volumen an Futterbrei und Wasser einen Wert erreicht hat, bei welchem der Futterbreistrang 77 die Lage B erreicht hat, nämlich in dem Stall 3, in welchem Tiere gefüttert werden sollen, wird die Rohrleitung 17 stromab vom Stall 3 geschlossen, am einfachsten durch Schließen des zugehörigen Gruppen-Endventils 55-3, und die Abgabeventile 61-3 des Stalles 3 werden geöffnet. Die Förderung durch die Fördereinrichtung 45 wird fortgesetzt, bis ein vorbestimmtes weiteres Volumen gefördert ist, das gleich dem für den Stall 3 benötigten Futtervolumen ist. Dann ist der Zustand C erreicht. Wegen der aus dem Futterbreistrang entnommenen Futtermenge ist die Länge des nunmehr noch vorhandenen Futterbreistranges 81 entsprechend kürzer geworden. Sodann wird der Durchfluß durch die Rohrleitung 17 stromab vom Stall 3 wieder freigegeben, hier durch Öffnen des Gruppen-Endventils 55-3, die Abgabeventile 61-3 des Stalles werden geschlossen, und die Förderung wird fortgesetzt, bis der Strang 81 über Zwischenlagen, zum Beispiel D, die zum Füttern des Stalles 7 erforderliche Lage E einnimmt, d. h. vor den Abgabestellen 59-7 des Stalles 7. Sodann wird die Leitung 17 stromab geschlossen, nämlich durch Schließen des Gruppen-Endventils 55-7, und bei fortgesetzter Förderung werden nacheinander die Abgabeventile 61-7 des Stalles 7 im Sinne der Figur von rechts nach links für vorbestimmte Zeiten geöffnet. Durch die dadurch aus dem Futterbreistrang entnommenen Futtermengen wird der Futterbreistrang fortschreitend verkürzt, nämlich über die Phasen F und G, bis schließlich der letzte Rest des Futterbreies über das in der Figur ganz links dargestellte Abgabeventil in den Stall 7 abgegeben worden ist. Danach liegt die Vorrichtung wieder wie zu Anfang in einem vollständig mit Wasser gefüllten Zustand vor.

Es versteht sich, daß bei den beschriebenen Vorgängen der Futterbreistrang sich an seinen Enden teilweise mit der Füllflüssigkeit (dem Wasser) vermischt, und daß die Steuerung des Futterbreistranges in bestimmte Lagen innerhalb der Rohrleitung 17 mit einer gewissen Ungenauigkeit behaftet ist. Es hat sich jedoch gezeigt, daß die auf diese Weise entstehenden Abweichungen von dem idealen Ablauf für die Praxis bedeutungslos sind. Das gilt insbesondere dann, wenn nach beendeter Fütterung die Rohrleitung 17 zusätzlich mit Wasser durchgespült wird.

Man erkennt ohne weiteres, daß alle beschriebenen Vorgänge automatisch nach einem vorgegebenen Programm zum Ablauf gebracht werden können, insbesondere unter Kontrolle und Steuerung durch das Steuergerät 33, und daß eine Umstellung auf andere Anforderungen sich leicht durch Verändern des Programms erzielen läßt.

**Patentansprüche**

1. Verfahren zum automatischen Füttern von Tieren, insbesondere Schweinen, bei welchem ein vorgegebener Strom eines pumpfähigen Futterbreies von einem Zubereitungsbereich aus zu einem davon entfernten Fütterungsbereich durch eine Rohrleitung gefördert wird, deren Querschnitt entsprechend der angesichts der Konsistenz des Futterbreies erforderlichen Förder-Antriebsleistung und dem bei Besetzung des Fütterungsbereiches mit herangewachsenen Tieren vorliegenden Futterbedarf bemessen ist, wobei vorzugsweise die Fütterungszeiten und Futtermengen automatisch vorgegeben werden, dadurch gekennzeichnet, daß zum Füttern mit verringertem Futterbedarf oder veränderter Futter-Zusammensetzung, insbesondere bei der Fütterung von Jungtieren, die sich gegebenenfalls nur in gewählten Abschnitten des Fütterungsbereiches befinden, ein Futterbrei-Strang begrenzter Länge mittels einer in die Rohrleitung eingegebenen ernährungsphysiologisch unbedenklichen Füllflüssigkeit durch die Rohrleitung zu wenigstens einer Abgabestelle in den Fütterungsbereich befördert wird, und daß die Länge des Stranges derart bemessen wird, daß der Strang in einer für seine Frischhaltung hinreichend kurzen Zeitspanne verfüttert wird.

2. Verfahren nach Anspruch 1, bei dem in dem Fütterungsbereich der Futterbrei über eine Reihe von längs der Rohrleitung verteilten, aus der Rohrleitung gespeisten Abgabestellen abgegeben wird, die in Gruppen von je mindestens einer Abgabestelle wahlweise zu der Rohrleitung hin geöffnet werden können, dadurch gekennzeichnet, daß ausgewählte Gruppen von Abgabestellen nacheinander aus ein und demselben Futterbreistrang mit gewählten Futterbreimengen versorgt werden, wobei die jeweils anderen Gruppen von der Rohrleitung abgesperrt werden.

3. Verfahren nach Anspruch 1 oder 2, dadurch gekennzeichnet, daß die Lage des Futterbreistranges in der Rohrleitung aus dem in die Rohrleitung eingegebenen Volumen an Futterbrei und Füllflüssigkeit ermittelt wird und nur im Lagebereich des Futterbreistranges liegende Abgabestellen der ausgewählten Gruppen zu der Rohrleitung hin geöffnet werden.

4. Verfahren nach Anspruch 3, dadurch gekennzeichnet, daß Leitventile zum Bestimmen des Transportweges des Futterbreistranges in Abhängigkeit von der ermittelten Lage des Futterbreistranges betätigt werden.

5. Verfahren nach einem der vorhergehenden Ansprüche, dadurch gekennzeichnet, daß entsprechend einem Fütterungsprogramm mehrere Futterbreistränge zu bestimmten Zeiten nacheinander und dazwischen die Füllflüssigkeit in die Rohrleitung eingegeben werden.

6. Verfahren nach Anspruch 5, dadurch gekennzeichnet, daß Futterbreisträng verschiedener Zusammensetzung verwendet und zu gewählten Abgabestellen geleitet werden.

7. Verfahren nach einem der vorhergehenden Ansprüche, dadurch gekennzeichnet, daß die Füllflüssigkeit und etwaige überschüssige Anteile des Futterbreistranges aus dem Fütterungsbereich über eine wahlweise zu öffnende Ableitung abgeführt werden.

8. Verfahren nach einem der vorhergehenden Ansprüche, dadurch gekennzeichnet, daß als Füllflüssigkeit Wasser verwendet wird.

9. Vorrichtung zum Durchführen des Verfahrens nach einem der vorhergehenden Ansprüche, mit einer Zubereitungseinrichtung (19, 21, 23, 25) zum Herstellen eines pumpfähigen Futterbreies (41) aus mehreren Komponenten, einer Rohrleitung (17) zum Herstellen einer Verbindung zwischen dem Zubereitungsbereich (15) und einem Fütterungsbereich (9) mit wenigstens einer Gruppe von Abgabestellen (59), die steuerbare Abgabeventile (61) aufweisen, einer Fördereinrichtung (45) zum Fördern von in der Rohrleitung befindlichen pumpfähigen Medien, Mitteln (53) zum Bestimmen des Durchflusses in der Rohrleitung (17) und einer Steuereinrichtung (33) zum vorzugsweise automatischen Steuern der Vorrichtung, wobei der freie Querschnitt der Rohrleitung (17) entsprechend der Viskosität des Futterbreies derart gewählt ist, daß ein für die Fütterung von erwachsenen Tieren ausreichender Durchfluß an Futterbrei mit annehmbarem Leistungsaufwand für die Fördermittel herstellbar ist, und wobei vorzugsweise die Rohrleitung jenseits der Abgabestellen über ein steuerbares Ablaufventil (55-7) an eine Ablaufleitung (69) angeschlossen ist, dadurch gekennzeichnet, daß Mittel zum wahlweisen bemessenen Einspeisen einer ernährungsphysiologisch unbedenklichen Füllflüssigkeit, vorzugsweise Wasser, anstelle von Futterbrei in die Rohrleitung (17) vorgesehen sind, und daß die Steuereinrichtung (33) Mittel zum Bestimmen der Lage eines in die Rohrleitung (17) eingegebenen und von Füllflüssigkeit vortreibbaren Futterbreistranges (79, 81) begrenzter Länge aufweist und zum Steuern des Abgabeventile (59) in Abhängigkeit von der ermittelten Lage des Futterbreistranges eingerichtet ist.

10. Vorrichtung nach Anspruch 9, dadurch gekennzeichnet, daß die Gruppen der Abgabestellen (59) an längs der Rohrleitung (17) verteilten Stellen an die Rohrleitung angeschlossen sind.

11. Vorrichtung nach Anspruch 9 oder 10, dadurch gekennzeichnet, daß die zu ein und derselben Gruppe gehörigen Abgabestellen (59) an längs der Rohrleitung (17) verteilten Stellen an die Rohrleitung angeschlossen sind.

12. Vorrichtung nach einem der Ansprüche 9 bis 11, dadurch gekennzeichnet, daß die Zubereitungseinrichtung zum wahlweisen Herstellen von Futterbreisträngen unterschiedlicher Zusammensetzung eingerichtet ist.

**Claims**

1. A method of automatically feeding animals, especially pigs, in which a predetermined stream of a pumpable feed pulp is conveyed *via* a pipeline from a preparation zone to a feeding zone remote therefrom, the crosssectional area of said pipeline being dimensioned corresponding to the conveyor drive output necessary in view of the consistency of the feed pulp and the feed requirement to be met when the feeding zone is occupied by grown up animals, with the feeding times and amounts of feed being preferably predetermined automatically, characterized in that for feeding with the feed requirement reduced or the feed composition changed, especially when feeding young animals which are perhaps present only in selected portions of the feeding zone, a feed pulp strand of limited length is conveyed through the pipeline to at least one dispensing station in the feeding zone by means of a filling liquid introduced into the pipeline, which is unobjectionable from a nourishing physiological viewpoint, and in that the length of the strand is dimensioned to be such that said strand is fed within a time interval sufficiently short to keep it fresh.

2. A method according to claim 1, wherein the feed pulp is dispensed in the feeding zone *via* a series of dispensing stations distributed along the pipeline and fed from the pipeline, said dispensing stations being adapted to be selectively opened towards the pipeline in groups of at least one dispensing station each, characterized in that selected groups of dispensing stations are supplied one after the other with selected amounts of feed pulp from one and the same feed pulp strand, with the respective other groups being shut off from the pipeline.

3. A method according to claim 1 or 2, characterized in that the position of the feed pulp strand in the pipeline is detected from the volume of feed pulp and filling liquid introduced into the pipeline, and only those dispensing stations of the selected groups are opened towards the pipeline which are disposed within the zone in which the feed pulp strand is positioned.

4. A method according to claim 3, characterized in that guiding valves are actuated to determine the path of transport of the feed pulp strand in dependence upon the detected position of the feed pulp strand.

5. A method according to claim 1, characterized in that several feed pulp strands are introduced one after the other into the pipeline at predetermined times, with the filling liquid introduced in between, according to a feeding program.

6. A method according to claim 5, characterized in that feed pulp strands of different compositions are used and guided to selected dispensing stations.

7. A method according to claim 1, characterized in that the filling liquid and possible surplus proportions of the feed pulp strand are discharged from the feeding zone *via* a selectively openable discharge line.

8. A method according to claim 1, characterized in that water is used as the filling liquid.

9. An apparatus for performing the method according to any one of the preceding claims, comprising a preparation means (19, 21, 23, 25) for preparing a pumpable feed pulp (41) from several components, a pipeline (17) for establishing a connection between the preparation zone (15) and a feeding zone (9) comprising at least one group of dispensing stations (59) having controllable discharge valves (61), a conveying means (45) for conveying pumpable media present in the pipeline, means (53) for determining the flow in the pipeline (17), and control means (33) for preferably automatically controlling the apparatus, with the free cross sectional area of the pipeline (17) being selected corresponding to the viscosity of the feed pulp so that a flow of feed pulp sufficient to feed grown up animals may be established at a reasonable expenditure in terms of energy for the conveying means, and with the pipeline beyond the dispensing stations preferably being connected to an outlet line (69) *via* a controllable outlet valve (55-7), characterized in that means are provided for the selective metered introduction of a nourishing-physiologically unobjectionable filling liquid, preferably water, into the pipeline (17) instead of feed pulp, and in that the control means (33) comprises means for determining the position of a feed pulp strand (79, 81) of limited length charged into the pipeline (17) and adapted to be propelled by means of a filling liquid and is designed to control the discharge valves (59) in dependence upon the detected position of the feed pulp strand.

10. An apparatus according to claim 9, characterized in that the groups of dispensing stations (59) are connected to the pipeline (17) in locations distributed along the length of the pipeline.

11. An apparatus according to claim 9, characterized in that the dispensing stations (59) belonging to one and the same group are connected to the pipeline (17) at locations distributed along the length of the pipeline.

12. An apparatus according to one of the claims 9 to 11, characterized in that the preparation device is arranged for selectively producing feed pulp strands of different compositions.

## Revendications

1. Procédé pour alimentation automatique des bestiaux, en particulier des porcs, suivant lequel un courant prédéterminé d'une pâtée alimentaire apte à être pompée est acheminé à partir d'une zone de préparation jusqu'à une zone de distribution d'alimentation située à distance par l'intermédiaire d'une canalisation tubulaire dont la section transversale est dimensionnée suivant la puissance d'entraînement nécessaire pour le déplacement, eu égard à la consistance de la pâtée alimentaire et compte tenu des besoins de nourriture existant lorsque la zone d'alimentation est occupée par des bêtes adultes, les moments et quantités de nourriture étant de préférence automatiquement préfixés, caractérisé en ce que pour l'alimentation en quantité réduite ou avec composition modifiée de l'alimentation, en particulier pour nourrir de jeunes bêtes, qui ne se trouvent éventuellement que dans certaines régions délimitées de la zone de distribution d'alimentation, un cordon de pâtée alimentaire de longueur limitée est acheminé par la canalisation tubulaire jusqu'à au moins un poste de prélèvement situé dans la zone de distribution d'alimentation par l'intermédiaire d'un liquide de remplissage qui est sans inconvénient pour la physiologie de la nutrition, injecté dans la canalisation, et en ce que la longueur de cordon est dimensionnée de façon que le cordon soit consommé en un intervalle de temps suffisamment court pour sa bonne conservation.

2. Procédé selon la revendication 1, dans lequel dans la zone de distribution d'alimentation de la pâtée alimentaire, celle-ci est prélevée par une série de postes de prélèvement alimentés par la canalisation tubulaire et répartis le long de celle-ci, qui peuvent être ouverts à volonté vers la canalisation, par groupes d'au moins chacun un poste, caractérisé en ce que les groupes sélectionnés de postes de prélèvement reçoivent successivement les quantités de pâtée alimentaire choisies à partir du même cordon unique de pâtée alimentaire, tandis que tous les autres groupes de la canalisation sont fermés.

3. Procédé selon la revendication 1 ou 2, caractérisé en ce que la position du cordon de pâtée alimentaire dans la canalisation tubulaire est déterminée à partir des volumes, introduits dans la canalisation, de pâtée alimentaire et de liquide de remplissage et en ce que seuls les postes de prélèvement, se trouvant dans la zone du cordon de pâtée alimentaire, des groupes sélectionnés sont ouverts vers la canalisation tubulaire.

4. Procédé selon la revendication 3, caractérisé en ce que des soupapes de direction pour déterminer le trajet de transport du cordon de pâtée alimentaire sont actionnées en fonction de la situation déterminée du cordon de pâtée alimentaire.

5. Procédé selon l'une des revendications précédentes, caractérisé en ce que plusieurs cordons de pâtée alimentaire sont introduits dans la canalisation tubulaire à des moments déterminés les uns après les autres, conformément à un programme d'alimentation, ainsi qu'entre eux, le liquide de remplissage.

6. Procédé selon la revendication 5, caractérisé en ce que des cordons de pâtée alimentaire de composition différente sont utilisés et amenés à des postes de prélèvement sélectionnés.

7. Procédé selon l'une des revendications précédentes, caractérisé en ce que le liquide de remplissage et des quantités superflues éventuelles du cordon de pâtée alimentaire sont évacués hors de la région de distribution d'alimentation par l'intermédiaire d'une dérivation s'ouvrant à volonté.

8. Procédé selon l'une des revendications précédentes, caractérisé en ce qu'on utilise de l'eau comme liquide de remplissage.

9. Dispositif pour la mise en œuvre du procédé selon l'une des revendications précédentes, comprenant un dispositif de préparation (19, 21, 23, 25) servant à la fabrication d'une pâtée d'alimentation apte à être pompée (41) comportant plusieurs composants, une canalisation tubulaire (17) pour établir une liaison entre la zone de préparation (15) et une zone de distribution d'alimentation (9), incluant au moins un groupe de postes de prélèvement (59) qui comporte des soupapes de débit (61) pouvant être commandées, un dispositif d'acheminement (45) pour acheminer les fluides aptes à être pompés qui se trouvent dans la canalisation tubulaire, des moyens (53) pour déterminer le débit dans la canalisation tubulaire (17) et un dispositif de commande (33) pour commander le dispositif de préférence automatiquement, la section transversale libre de la canalisation tubulaire (17) étant choisie en fonction de la viscosité de la pâtée alimentaire de façon que pour l'alimentation des bêtes adultes un débit suffisant de pâtée alimentaire puisse être établi avec une puissance acceptable pour les moyens d'acheminement, et la canalisation tubulaire étant de préférence raccordée après les postes de prélèvement à une conduite de décharge (69) par l'intermédiaire d'une soupape de décharge (55-7), pouvant être commandée, caractérisé en ce qu'il est prévu des moyens pour introduire dans la canalisation tubulaire (17) des quantités réglables à volonté, d'un liquide de remplissage sans inconvénient pour la physiologie de la nutrition, de préférence de l'eau, à la place de la pâtée alimentaire et en ce que le dispositif de commande (33) comporte des moyens pour déterminer la position d'un cordon de pâtée alimentaire (79, 81) de longueur déterminée, lequel est introduit dans la canalisation tubulaire (17) et peut être propulsé par un liquide de remplissage, le dispositif de commande étant agencé pour commander les soupapes de débit (59) en fonction de la situation du cordon de pâtée alimentaire.

10. Dispositif selon la revendication 9, caractérisé en ce que les groupes des postes de débit (59) sont raccordés à la canalisation tubulaire en des emplacements répartis le long de cette canalisation (17).

11. Dispositif selon la revendication 9 ou 10, caractérisé en ce que les postes de débit (59) appartenant à un même groupe sont raccordés à la canalisation tubulaire (17) en des emplacements répartis le long de cette canalisation.

12. Dispositif selon l'une des revendications 9 à 11, caractérisé en ce que le dispositif de préparation est agencé pour produire à volonté des cordons de pâtée alimentaire de différentes compositions.